# EUROPEAN PATENT SPECIFICATION

(11) **EP 0 423 789 B1**
(45) Date of publication and mention of the grant of the patent: **14.06.1995**
(21) Application number: 90119999.2
(22) Date of filing: 08.04.1987
(51) Int. Cl.: A01D 41/08

(54) **Crop harvesting apparatus**
Halmfruchterntevorrichtung
Dispositif pour récolter des céréales

(30) Priority: 09.04.1986 GB 8608585
(43) Date of publication of application: 24.04.1991
(62) Divisional of application: 87303048.0
(73) Proprietor: BRITISH TECHNOLOGY GROUP LIMITED, London SE1 6BU (GB)
(72) Inventor: Klinner, Wilfred Erwin, Milton Keynes, Buckinghamshire MK17 8TN (GB)
(74) Representative: Trevor-Briscoe, David William

(56) References cited:
- US-A- 1 418 542
- US-A- 3 597 906
- SOVIET INVENTIONS ILLUSTRA- TED, P,Q sections, week K01, February 16, 1983, DERWENT PUBLICATIONS LTD., London, P 12

## Description

The present invention relates to apparatus for harvesting crop. The invention is concerned with detaching from the stems or other plant parts of standing crop, seeds, seed-bearing parts, leaves, twigs, flowers, or other predetermined required portion of the crop, collecting the required portion, and leaving the remaining stripped parts of the crop standing in the field. The invention has particular but not exclusive application in the harvesting of grain crops, such as wheat, oats, barley, and rice. The invention also has application in the stripping of leaves, young shoots, and sometimes blossom from crops. Examples include lucerne (alfalfa) leaves for protein production, and the leaves and flowers of herbs and other crops used for the extraction of essential oils and other constituents.

The present specification contains some subject matter in common with the specification of European patent application No. 8730348.0 (publication No. 0 241 276) from which this application has been divided.

In US-A-1418542 (Dill) a harvester for stripping grain from standing crop has a stripper reel composed of a series of spirally arranged stripper bars having stripper teeth or fingers. The stripper teeth are triangular and the side edges, which diverge from the distal tip, have upstanding flanges which strip and catch the grain and pass it back into troughs formed at the base of each row of stripping teeth. The troughs carry the grain rearwardly over the rotor axis and release the grain into a catch basin formed by the rear of a stationary hood which encases the reel and is open at its lower front portion.

It is an object of the present invention to provide improved apparatus for stripping required parts from a standing crop, usually the most valuable parts of the crop, namely the seed, leaves, and/or flowers. It is an object of the invention to overcome many of the disadvantages of known harvesting methods and devices, and to simplify, hasten and make less expensive the harvesting process.

According to the present invention in a first aspect there is provided apparatus for harvesting required crop parts from standing crop comprising a mobile frame for movement over the ground, moveable support means mounted for driven movement relative to the frame, a plurality of outwardly projecting crop engaging elements mounted on the moveable support means, guide means cooperating with the crop engaging elements to form a crop flow passage, and drive means for driving the moveable support means to carry the elements upwardly at a front region of the apparatus so as to detach from standing crop predetermined required parts of the crop and to move the detached crop parts along the crop flow passage, the crop engaging elements being arranged to engage standing crop while projecting forwardly relative to the direction of forward travel of the apparatus, the forwardly projecting crop engaging elements forming in operation a plurality of crop gathering regions, characterised in that each crop gathering region has a slot extending inwardly away from the distal ends of the elements, the slot following a wave-shaped path leading from side to side relative to the general direction of forward movement of the apparatus so as to induce a lateral shaking motion in the stems of crop which pass into the slot.

The invention encompasses apparatus for detaching from the stems or other plant parts of standing crop, seeds, seed-bearing parts, leaves, twigs, flowers and/or other predetermined required parts of the crop, by rubbing and/or breaking and/or tearing the parts from the stems.

By the term standing crop is meant crop in the field before any harvesting operation has been carried out on it, for example before any cutting operation, and the term standing crop includes crop which may be laid, leaning, or twisted, as well as upright crop.

In some arrangements the said inwardly extending slot is positioned at the junction of inwardly converging edges of adjacent elements, the slot being aligned along the general direction of forward movement of the apparatus.

In preferred constructions of the invention, at least some of the crop engaging elements have re-entrant edges.

Preferably the drive means is arranged to drive the crop stripping elements at a speed such that detached crop parts are impelled along the crop flow passage and do not reside to any substantial extent on the moving elements.

Preferably the drive means is arranged to drive the crop stripping elements at a tip speed greater than 5 m/s, most preferably at a tip speed in the range 5 to 15 m/s.

Preferably the crop stripping elements are resiliently mounted, and/or made of flexible resilient material. Preferably the guide means comprises a cover extending around at least part of the region at which the crop engaging elements move at the front region of the apparatus.

Preferably the said moveable support means comprises a rotor, but may alternatively comprise an endless conveyor.

In some arrangements the crop engaging elements are arranged in rows transverse to the direction of forward movement of the apparatus. Preferably the said crop stripping elements are arranged with succeeding elements along the support means in register with one another.

It is a feature of the present invention that the crop engaging elements are preferably moved at a relatively high speed. A number of criteria can be used to establish the required high speed, for example the speed of movement of the crop engaging elements relative to the frame will normally be set to be substantially greater than the forward speed of movement of the frame, and set at a speed such as to propel the stripped material in a fast moving stream along the crop flow passage defined between the guide means and the crop engaging elements. Preferably the tip speed of the crop engaging elements is greater than 5 m/s, conveniently within the approximate range 5 to 15 m/s. The forward speed of the frame may be in a range up to 15 km/hour, preferably in the range 3 to 9 km/hour.

A distinction of row crops from cereal crops is, for example, that the row spacing is very much greater, and that row crops have stems several times the diameter of cereal crops. For cereals the spacing might be 125 to 175 mm, and for row crops the spacing might be 200 to 750 mm. The stem diameter for cereals might be 3 to 6 mm. The stem diameter for row crops might be 8 to 40 mm. Row crops grow very much taller, for example 2 m or more. Another difference is that often the material being harvested, for example cobs, occurs relatively low down the stem, whereas with cereal crops the material being harvested is all positioned at the head of the crop. Examples of row crops include maize, sorghum, oil seed rape, and field beans.

There will now be introduced a number of further features of the invention, applicable in harvesting apparatus generally.

In general it is a feature that at least some of the crop engaging elements have a transverse surface for impelling the detached crop parts along the crop flow passage.

By a transverse surface is meant a surface which extends principally transverse to the direction of the movement of the element by the moveable support means. The surface may conveniently be substantially flat, but in some arrangements may be curved, preferably slightly concave.

In accordance with another feature at least some of the crop engaging elements comprise crop stripping elements each of which has a narrow tip for entering into and dividing crop, and has side edges for detaching the required crop parts, the said side edges diverging from each other in a direction away from the distal tip of the element.

Preferably the said side edges diverge from each other over at least a quarter of the crop engaging length of the element, more preferably over at least a third of the crop engaging length of the element, and most preferably over the major proportion of the crop engaging length of the element.

Preferably the said side edges diverge from each other away from the distal tip of the element at a total included angle of about 30°.

The elements may be of varying shapes which will be set out hereinafter, but it is preferred particularly that the distal tip region of each crop stripping element is pointed with the distal side edges diverging from the apex of the element, preferably the distal tip region having a transverse leading surface.

In accordance with one preferred feature of the invention there are provided on side edges of the crop stripping elements, and/or at the junction of adjacent crop stripping elements, relief spaces for detaching crop parts by the effect of edges of the spaces and for allowing stripped remaining crop parts to be released from the elements.

For example the crop stripping elements may be formed by the teeth of a series of transverse combs mounted on the support means transverse to the direction of movement of the support means, there being provided at the junction of adjacent side edges of adjacent teeth on a comb an aperture allowing stripped stems to be released from the comb, the said aperture having side edges adapted to strip the required parts from the crop stems.

In accordance with a preferred feature it may be provided that at least some of the relief spaces are defined by re-entrant edges of the elements adapted to strip crop parts from regions of the standing crop which face forwardly relative to the intended direction of movement of the apparatus.

Conveniently the crop stripping elements are formed of synthetic plastics material, but they may be made of metal or other materials of adequate strength and wear resistance.

As has been mentioned, it is a feature of the present invention that the crop engaging elements are preferably moved at a relatively high speed. Examples of use of the invention, in harvesting cereals may include moving the crop engaging elements relative to the frame at a speed such that the tip speed of the elements is in the range 10 to 25 m/s. In accordance with another preferred example, use of the invention in harvesting lucerne (alfalfa) may include moving the crop engaging elements relative to the frame at a speed such that the tip speed of the elements is in the range 15 to 30 m/s.

It is a general preferred feature of the present invention that the crop engaging elements may enter the crop with minimum disturbance, and move upwardly through the crop to strip the required parts of the crop without the need for the crop to be supported in an upright position by any stationary guide members projecting forwardly of the said moving crop engaging elements. It is to be appreciated that there may be provided in some arrangements additional stationary lifting elements for raising the crop to the moving crop engaging elements in suitable manner where the crop is laid, but there is, at least in preferred embodiments of the invention, no requirement for stationary guide elements to hold the crop in the upright position during stripping in the vertical crop region swept by the crop stripping elements.

As has been mentioned, the guide means will normally consist of or include a hood or cover over the upwardly and rearwardly moving elements. It is preferred that the said hood may be moveable either closer to or further from the crop engaging elements, and/or around a curved path around the front of the path of movement of the elements.

In accordance with another feature of the invention, there may be provided means for adjusting the height of support means for the crop engaging elements, either together with the height of the overhead hood, or independently of the height of the overhead hood, to allow adjustment of the height at which the crop engaging elements enter the crop and move upwardly through the crop.

The present invention has a number of applications, particularly in the harvesting of grain. The stripped material can be collected into trailers or bulk containers for transportation to a central plant for processing. In the case of cereals and other seeds this may include completion of the threshing process and separation of the seed from material other than grain. Alternatively, particularly with cereals and other seeds, the stripped material may be fed directly into a processing machine, such as a combine harvester, for immediate threshing and cleaning. At a central plant or in the field the material other than grain may be collected loose or pressed for utilisation.

Generally, the invention finds application in the harvesting of mature seeds and grains, in the veining of peas and in the defoliation of annual and perennial crops as well as shrubs, including the non-destructive harvesting of leaves and shoots in one or repeated passes over the crop.

Embodiments of the invention will now be described by way of example with reference to the accompanying drawings in which:-
Figure 1 is a diagrammatic side view in section of a crop row harvester which may embody the invention;
Figure 2 is a front, part-sectional view of the crop row harvester shown in the direction of arrows AA in Figure 1 which may be adapted to embody the invention;
Figure 3 is a diagrammatic representation of a crop guide shown in Figure 1 in the direction of arrows BB in Figure 1;
Figure 4 shows in diagrammatic side view a front part of the apparatus of Figure 1, when in operation;
Figures 5, and 6 show a form of crop engaging element embodying the invention which may be used in the apparatus of Figure 1, Figure 5 showing a section along lines AA in Figure 6;
Figures 7 and 8 show respectively diagrammatic plan and sectional views of a crop stripping element which may be adapted to embody the present invention when considered together with Figures 5 and 6;
Figure 9 is a diagrammatic side view in section of one general form of apparatus for harvesting crop, which may embody the present invention;
Figure 10 is a diagrammatic side view in section of an alternative general form of apparatus for harvesting crop, which may embody the invention;
Figure 11 is a diagrammatic side view in section of a further alternative general form of apparatus for harvesting crop, which may embody the invention;
Figure 12 is a perspective view from the front of crop harvesting apparatus, of the form shown generally in Figure 9a, which does not embody the invention but is included to show the general construction of apparatus which may be modified to embody the present invention;
Figure 13a is a perspective view from the rear of part of the main rotor shown in Figure 12;
Figure 13b is a perspective view of an end portion of the main rotor shown in Figures 12 and 13a;

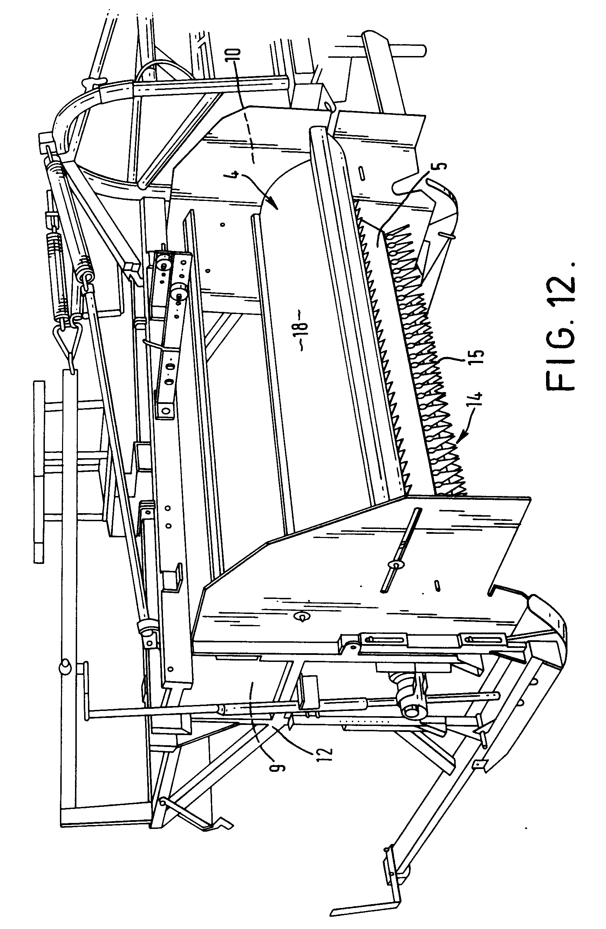

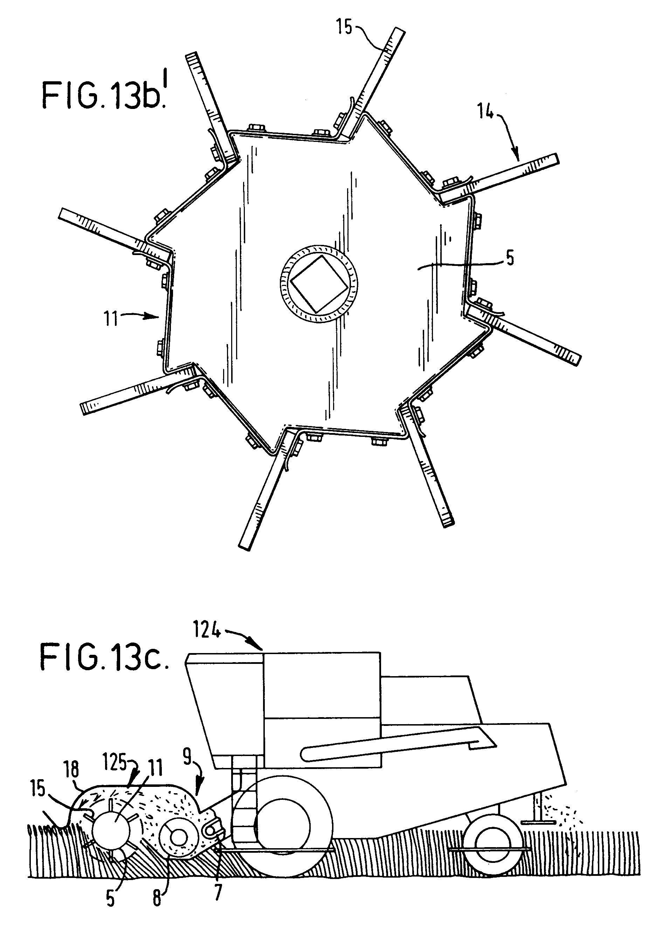

Figure 13b' is an end view of the rotor shown in Figures 12 to 13b;
Figure 13c shows in diagrammatic side view, partly in section, a harvesting apparatus which may embody the invention and generally in the form of a conventional combine harvester in which a stripping apparatus embodying the invention replaces the conventional cutting table of the combine harvester;

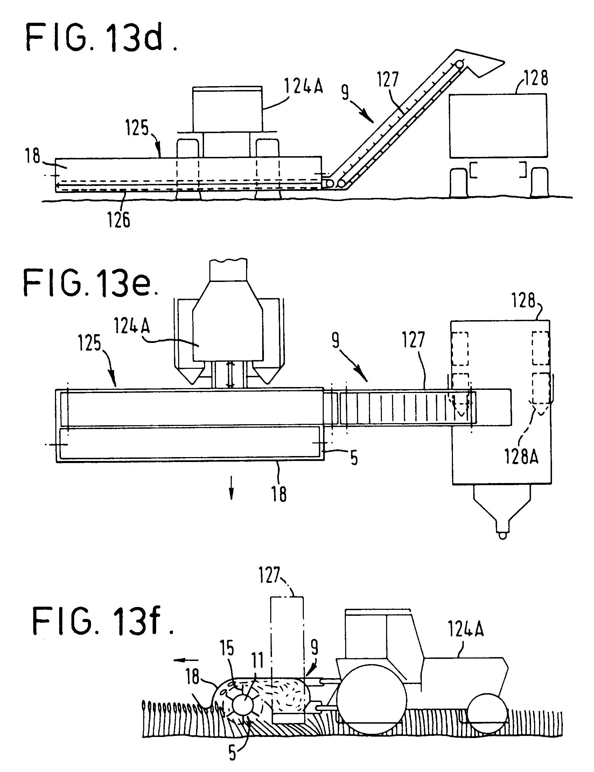

Figure 13d is an outline front view of a stripping apparatus which may embody the invention, delivering detached material onto a transverse belt conveyor and then onto a cleated-belt elevator for delivery into a bulk trailer;
Figure 13e is an outline plan view of the apparatus shown in Figure 13d; and
Figure 13f is an outline side view, partly in section, of the stripper harvester shown in Figure 13d.

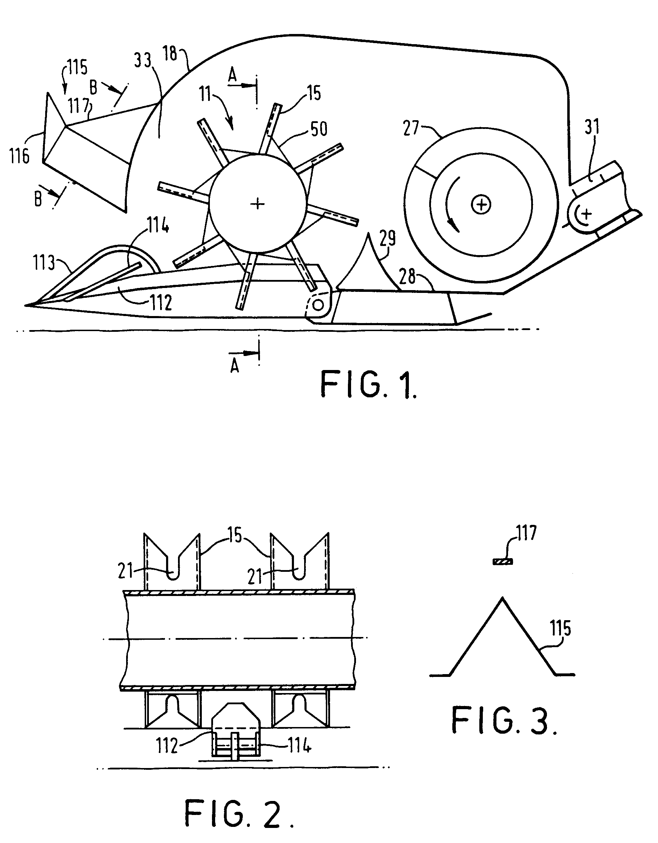

Referring to Figure 1 the apparatus comprises a mobile frame 12 on which is mounted a moveable support means which in the example shown is a rotor 11, carrying outwardly projecting crop engaging elements 15. The rotor 11 is driven in the so-called overshot mode so that the crop engaging elements 15 are moved in an upward direction at the front of the apparatus. Guide means co-operate with the crop engaging elements 15 to form a crop flow passage 33. In the example shown, the guide means are constituted by a hood or cover 18 which extends around at least part of the front half of the rotor and defines with the rotor elements 15 the crop flow passage 33 along which crop is conveyed by the rotor. The hood or cover 18 prevents forward projection of parts of the crop detached by the rotor 11.

In operation, rotation of the rotor 11 moves the crop engaging elements 15 so that the elements gather the crop and then move upwardly through the crop, gathering one or more crop stems. As the elements 15 reach the seed or fruit bearing parts of the crop the required parts to be detached are detached by rubbing and/or breaking and/or tearing the parts from the stems.

After the detachment, the required crop parts are conveyed upwardly and rearwardly over the rotor 11, and pass to crop conveying means positioned within a collecting trough 28 having a front wall 29 in close proximity to the rear of the rotor 11. Usually the crop transfer means will include means for transferring crop laterally, eg an auger 27, and means for conveying the crop rearwardly, eg a slatted chain conveyor 31.

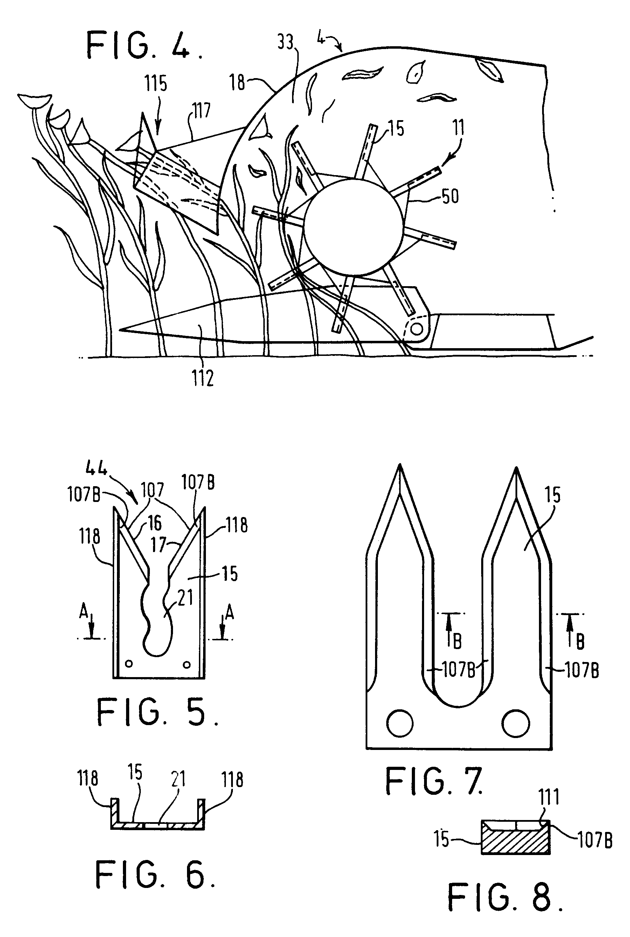

Figure 4 shows the apparatus of Figure 1 in operation, and illustrates the sequence of guiding and stripping a row crop resembling a hybrid between maize and sunflowers. For such crops the stripping rotor diameter may be in excess of 1 m and that the number of transverse rows of stripping elements can be greater than the eight shown. The dimensions of the stripping elements may be adapted to suit specific applications, particularly the element length, the width to length ratio, the angle of the crop engaging edges, and the size and inclination of wings which may be provided along the outer sides of the elements.

With reference to Figure 2, there is provision for the lateral spacing of the stripping elements on the rotor core to be adjustable, to adapt the rotor quickly and easily to different crops. For example, the elements may be located in transverse channels with provision for clamping or locking them in position. Moreover, the circumferential position of elements covering adjacent crop rows may be offset, so that the drive torque characteristic of the stripping rotor is smoothed out. That is to say, that the elements need not be positioned in straight rows parallel to the axis of rotation of the rotor.

Section AA of Figure 1 is shown in Figure 2 and indicates that the elements 15 are laterally spaced apart to coincide with the row spacing of the crop. (Figure 2 shows a construction which does not embody the invention, but is included by way of explanation of the general structure of the apparatus of Figure 1, which itself may embody the invention.) Between sets of circumferentially aligned stripping elements 15 there is provided hingedly attached to the front of the harvester table a divider assembly 112 which protrudes forwardly into the spaces between crop rows. The dividers 112 have the purpose of deflecting upwardly and sideways any crop stems or parts which are misaligned in respect to the stripping elements 15. It is arranged that the stripping rotor 11 and hood 18 can be raised and lowered independently of such dividers 112 above a minimum setting.

As shown in Figure 2, there may optionally be attached to the main body of the crop divider 112 a central, upwardly projecting bow divider 113. At the sides are rearwardly and upwardly extending crop guides 114, which may be provided with angular adjustment. Attached to the front of the lower hood section 18 are optional upper crop guides 115 whose lateral spacing also coincides with the row spacing. At the front of each upper crop guide 115 is a flared intake section 116. The apex of the cross-sectional shape of an upper guide 115 lies on the vertical plane which passes through the centre of the recesses 21 in the stripping elements 15. Figure 3 shows a section through the upper crop guide 115 in the direction of arrows BB in Figure 1. A support strut 117 above the upper crop guide 115 may be designed to adjust the inclination of the guide 115.

It should be noted that the crop dividers can take many forms and may be pivoted or suspended in many different ways. They may be provided themselves with ground-engaging skids.

In Figures 5 and 6 is shown a row crop stripping element 15 (embodying the invention) of large dimension with wings 118 which are perpendicular to the plane of the element 15 and may be dimensioned to meet the requirements of specific crops. Converging crop-engaging edges 107 are provided with a ramp-shaped lip 107B (not shown in cross-section, but similar to that shown at 107B in Figure 8), to increase the upward angle of the trajectory of detached crop parts on leaving the element under centrifugal effect. The central recess 21 is shaped to be wavy, to impart a lateral agitation to the crop stems and at the same time provide re-entrant edges for more complete stripping.

In Figure 7 is shown a type of stripping element 15 (not embodying the invention, but having features which may be used in the element shown in Figures 5 and 6) which is particularly suitable for intermediate crops, whether grown in rows or not. Examples of such crops are field beans and oil seed rape. The dimensions of the element 15 can be adapted to suit specific requirements. Essentially each element 15 forms a small impelling paddle which has an optional raised, ramp-shaped rim 107B surrounding it along the crop-engaging edges. The purpose of the integral ramps 111 is to allow particles to escape freely but to direct them into more steeply inclined trajectories for more positive recovery. This is particularly important in crops which are at the point of shedding and which have seeds or other wanted parts in the lower stem regions. Between adjacent elements there may be optional relief apertures of suitable design. Figure 8 is a section in the direction of arrows BB in Figure 7. The slope of the ramp-shaped rim section 108 may be from approximately 15° to 45°, or steeper.

The ramp-shaped edges are provided by additional plastics material which increases the wear resistance in the edge region and causes crop particles leaving the elements under the effect of centrifugal force to be directed into more steeply inclined trajectories for more positive recovery. The edges have particular relevance in the context of moulded stripping elements made from resilient material. The edges are provided for influencing the trajectory of the detached crop parts in the impelling phase of previously collected material. One advantage of the crimped or raised edges, is that by these means radially mounted elements may be caused to achieve the effects of forwardly inclined elements.

Throughout this specification, corresponding components of the various arrangements shown are indicated by like reference numerals. For simplicity, the functions and inter-relationships between the various components are not described in connection with each figure when these have been described previously. It is particularly to be appreciated that where corresponding components have like reference numerals, the appropriate description applies equally each time those elements are referred to.

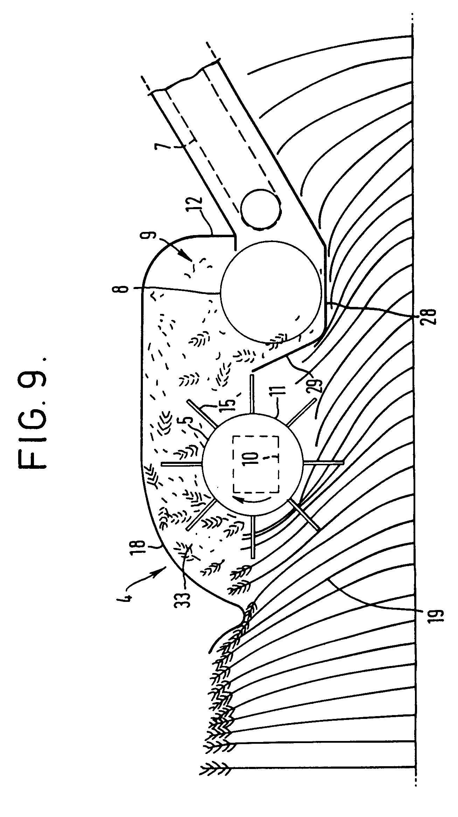

Referring to Figure 9 there is shown in diagrammatic side view the generalised layout of an apparatus which may embody the present invention for harvesting crop. The apparatus comprises a mobile frame for movement over the ground, indicated generally at 12. Mounted on the frame 12 is a moveable support means 5 which in the example shown is a rotor 11, although other support means may be used such as a conveyor belt.

Mounted on the rotor 11 are a plurality of outwardly projecting crop engaging elements 15, which may take a number of forms in accordance with the invention, as has been described hereinbefore or will be described hereinafter.

The rotor 11 is driven by drive means indicated diagrammatically at 10 which may conveniently comprise a gear box and power train driven by a tractor, or other power source such as the engine of a combine harvester. The rotor 11 is driven in the so-called overshot mode so that the crop engaging elements 15 are moved in an upward direction at the front of the apparatus. There are provided guide means 4 co-operating with the crop engaging elements 15 to forma crop flow passage 33. In the example shown, the guide means 4 are constituted by a hood or cover 18 which extends around at least part of the front half of the rotor and defines with the rotor elements 15 the crop flow passage 33 along which crop is conveyed by the rotor. The hood or cover 18 prevents forward projection of parts of the crop detached by the rotor 11.

In operation, rotation of the rotor 11 moves the crop engaging elements 15 so that the distal tips of the elements enter the crop with minimum disturbance of the stems 19 of the crop. The elements 15 then move upwardly through the crop, gathering one or more crop stems. As the elements 15 reach the upper parts of the crop the required parts to be detached are detached by rubbing and/or breaking and/or tearing the parts from the stems.

After the detachment, the required crop parts are conveyed upwardly and rearwardly over the rotor 11, and pass to crop conveying means indicated generally at 9, and positioned within a collecting trough 28 having a front wall 29 in close proximity to the rear of the rotor 11. Usually the crop transfer means 9 will include means for transferring crop laterally, indicated diagrammatically at 8, and means for conveying the crop rearwardly, indicated diagrammatically at 7. Conveniently the transverse crop transfer means 8 may be an auger, but may alternatively be a transverse conveyor belt. Conveniently the rearward crop transfer means 7 may be a conveyor, for example a slatted chain conveyor, although other means may be provided.

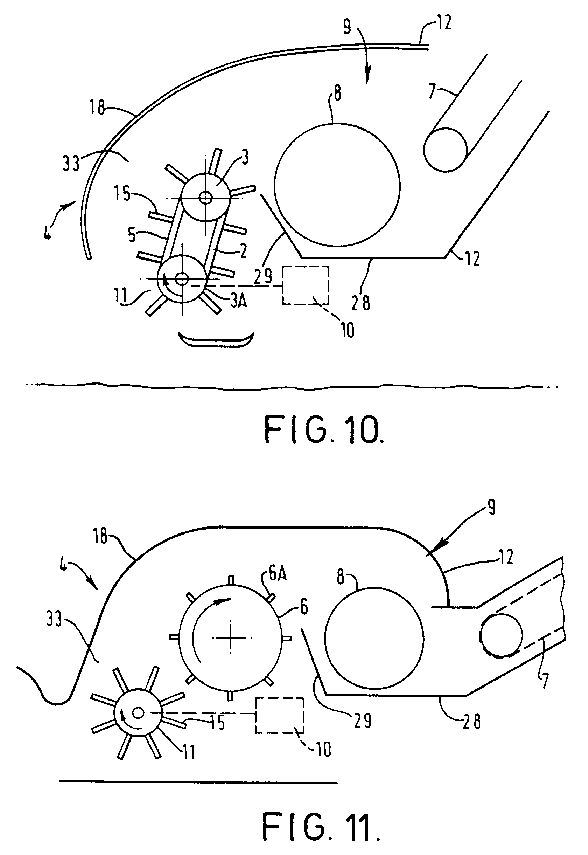

In Figure 10 there is shown in diagrammatic side view the generalised layout of an alternative apparatus which may embody the present invention, also for harvesting crop. The apparatus again comprises a mobile frame 12 for movement over the ground, and mounted on the frame 12 is a moveable support means 5 carrying a plurality of outwardly projecting crop engaging elements 15, which may take a number of forms in accordance with the invention, as has been described hereinbefore or will be described hereinafter. Except for the moveable support means 5, the other components of the apparatus of Figure 10 correspond generally to those shown in Figure 9, and in general the description given with regard to Figure 9 applies also to Figure 10.

The moveable support means 5 in the apparatus of Figure 10 comprises a conveyor 2 mounted for movement around two sets of pulleys or other guides 3 and 3A. The elements 15 are mounted on the conveyor 2, which is driven by drive means indicated generally at 10, in a direction such that the elements 15 move upwardly and rearwardly at the front of the apparatus.

In Figure 11 there is shown in diagrammatic side view the generalised layout of a yet further alternative general form of apparatus which may embody the present invention for harvesting crop. Again, in general the components shown in Figure 11 correspond to those shown in Figures 9 and 10, the only difference being in the form of a moveable support means 5 which is provided. Again, the description which has been provided with regard to Figure 9 is in general applicable also to the apparatus of Figure 11.

In Figure 11 the moveable support means 5 is provided by a rotor 11 of smaller diameter than that shown in Figure 9, and this rotor operates in close co-operation with a second rotor 6 (in the example a conveying drum), which is provided to the rear of and above the stripping rotor 11. The second rotor 6 carries crop conveying elements 6A (in the example relatively shallow ribs extending across the width of the drum, and spaced around its circumference). In the embodiment of Figure 11, the functions of stripping and conveying which in Figure 9 are carried out by the rotor 11, are divided between the rotors 11 and 6, with the rotor 11 being provided chiefly for stripping crop,and the rotor 6 being provided for conveying the crop upwardly and rearwardly over the rotor 6 to the crop transfer means 8 at the rear of the apparatus and to prevent crop wrapping around the rotor 11. As an alternative to shallow ribs, the rotor 6 may be fitted with deeper ribs of serrated profile, to intermesh in an overlapping mode with the combs on the rotor 11. In that form it positively prevents wrapping of crop around the rotor 11, even if the rotor has a smaller diameter than shown. As with the arrangements of Figures 9 and 10, the embodiment of Figure 11 may utilise any of the forms of crop stripping elements described hereinbefore or as will be described hereinafter, and may also utilise any features of the invention described herein.

It is particularly to be appreciated that the arrangements of Figures 9, 10 and 11 indicate general layouts of apparatus which may embody the invention, and that the various components shown may be provided in practice by any of the appropriate components which have been described hereinbefore, or are to be described hereinafter.

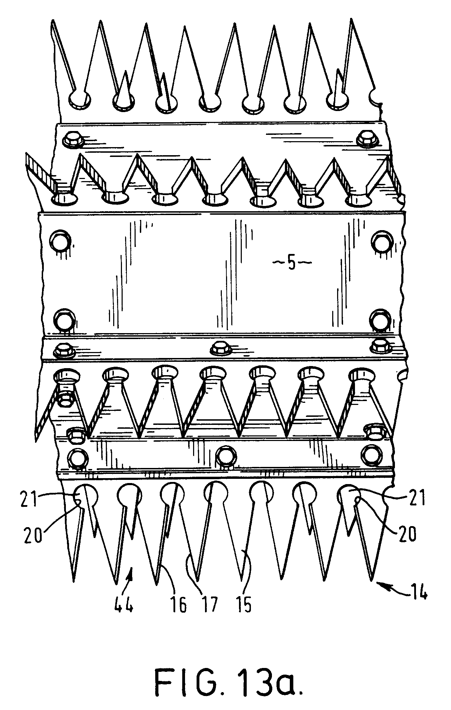

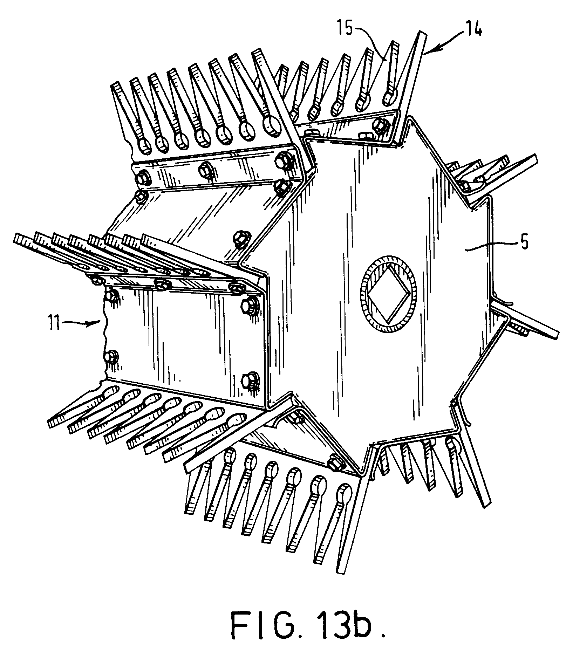

Referring now further to Figure 9, there is shown one form of a crop stripping apparatus which may embody the invention, which conveniently may be used as a header for a combine harvester, or may be used in conjunction with other threshing and grain separating apparatus. Reference is also made to Figures 12, 13a, 13b, and 13b', which do not illustrate the invention, but are included to show the general construction of apparatus which may be modified to embody the present invention.

The rotor 11 comprises an inner core 13 generally in the form of a circular section or, preferably, flat-sided core (to be described further hereinafter), and a succession of transverse combs 14 spaced circumferentially around the rotor 11.

As shown in Figures 12, 13a, 13b, and 13b', each comb 14 maybe formed from a transverse rib of solid material shaped to provide an array of teeth 15 mounted in a row transverse to the direction of movement of the harvesting apparatus through the crop. Each tooth 15 has side edges 16 and 17 which diverge from each other in a direction away from the distal tip of the tooth 15.

There is provided at the junction of each adjacent pair of side edges 16 and 17 of adjacent teeth 15, a relief aperture 21, which in the example shown, is part circular. Each aperture 21 is formed by relieved portions of adjacent teeth at the base regions thereof. Thus each tooth has a portion at or in the region of its base which is narrower than the widest part of the portion which has diverging side edges. In the examples shown, each comb is formed from a flat sheet-like rib of solid material, having cut therein, or otherwise formed, a series of keyhole shaped apertures, forming the said teeth.

The rotor 11 is driven to rotate in the so-called overshot mode, so that the combs 14 are moved in an upward direction at the front of the apparatus. There is provided over the front of the rotor 11 a hood or cover 18 to prevent forward projection of parts of the crop detached by the rotor 11.

In operation, rotation of the rotor 11 moves the combs 14 so that the narrow or pointed distal tips of the teeth 15 enter the crop with minimum disturbance of the stems 19 of the crop. The teeth 15 then move upwardly through the crop, gathering between adjacent side edges of adjacent teeth one or more crop stems. As the teeth 15 reach the seed-bearing heads of the crop, the seeds, or seed heads, are detached by rubbing the seeds free, or snapping off the seed heads. The seeds and seed heads are removed by engagement of the crop with the side edges 16 and 17 of the teeth, and by engagement with the edges 20 of the apertures 21 at the base of the junctions of adjacent side edges 16 and 17.

An upturned leading portion 32 of the cover usually engages crop first during forward movement of the apparatus. The upturned leading portion 32 of the rotor cover 18 engages the crop and preferably seals off the crop passage 33 immediately in front of the overshot rotor 11.

Material including grain and grain heads is dislodged and then impelled upwardly and rearwardly along the passage 33, by the effect of the combs 14. The overhead hood 18 is important in avoiding forward projection of grain and grain heads. The hood produces a funnel effect so that grain is guided into the machine rather than being ricochetted back onto the ground.

The stripped crop stems 19 pass under the machine and remain standing in the field. To avoid straw being pressed into the ground by tractor or machine wheels, dividers may be fitted in front of the wheels to force the crop residue apart temporarily.

It will normally be necessary to provide means for adjusting the height above ground of the stripping rotor 11 so as to be at the correct height in relationship to the height of the seed-bearing heads or other required parts of the crop. The height above the ground of the stripping rotor unit alone may be varied,or the height of the whole header arrangement may be varied according to conditions. For example, the rotor will need to be lowered in order to gather the desired material efficiently where crops are exceptionally short or laid. Proximity sensors may be attached at the front of the stripping rotor cover 18, and the output signal may be used to keep the rotor height adjusted automatically in relation to the crop horizon and/or to adjust the height of the rotor cover.

It should be noted that by adjustment of the speed of the combing ribs 14, together with appropriate arrangements of the geometry of the components, selective harvesting of only the ripest seed, particularly of herbage seed, may be effected during successive passes of the crop.

The present invention provides a number of advantages, in particular where the invention is applied to stripping grain from standing crop such as wheat, barley and oats. Grain stripping of standing crop leaves the straw standing rather than leaving cut straw from a combine harvester. The standing straw is easier to chop for subsequent disposal, than is the randomly orientated cut straw which is left spread or in spaced windrows by a combine harvester. Grain crop harvested in accordance with the present invention can,at least in preferred embodiments, have a higher proportion of grain to material other than grain, compared with the material collected by a combine harvester. In consequence higher work rates become possible, because in a combine harvester these are related principally to the throughput of straw. Finally, at least in preferred embodiments, the apparatus often leaves less wasted grain and grain heads in the field than does a conventional combine harvester.

Typical applications of the invention are shown in Figures 13c to 13f. In Figure 13c, a conventional combine harvester 124 is shown to have a crop stripping header 125 which may embody the invention, in place of the conventional cutting table. The grain and other material detached from the crop is delivered into lateral crop transfer means 8, in this case a transverse crop auger 27 from which it passes to a crop elevating means 7, in this case a central feed conveyor 31, and thence to the threshing drum and separating and cleaning mechanisms of the combine harvester. The small amount of efflux at the rear is spread evenly by a rotary spreading mechanism.

Figure 13d is an outline front view of a tractor-mounted stripping header 125 delivering the detached material onto a lateral crop transfer means, in this case a transverse belt conveyor 126, and then onto a crop elevating means in this case a cleated-belt elevator 127 for delivery into a bulk trailer 128 drawn by a second tractor. The tractor 124A operating the stripper header 125 has reverse-drive facility so that the operator can effectively supervise the harvesting operation. Figure 13c, shows an outline plan view where the tractor and trailer wheels are seen to be fitted with crop dividers 128A for parting the straw or other stripped crop so that the wheels can pass without pressing down significant amounts of it. An outline side view of the stripper harvester of Figures 13d and 13e is shown in Figure 13f.

There will now be discussed a number of general features which may be applicable to various embodiments set out above.

In addition to means for adjusting the height of the stripper mechanism and/or the hood or other guide means, by judgement of the operator, there may be provided sensors on or in front of the stripping header, or each section of such a header, to identify the crop horizon, the signals derived from the sensors being used to control the height of the stripping header or a section thereof, automatically. Normally the lower extent of stripper height setting will be provided by skids under or to the rear of bottom-dead-centre.

A further additional feature which may be provided in any of the embodiments described, comprises a reciprocating cutter bar or rotary cutter which may be fitted for severing the stripped material at a preselected height above ground, after stripping.

Considering now generally the dimensions which maybe used in embodiments of the invention, preferably the stripping rotor 11 for cereal and most forage crop has an overall diameter of 500-600 mm. However, smaller diameters are suitable for short or low crops (as in Figure 11), and larger diameters for particularly tall crops. By way of example, appropriate tip speeds of stripping rotors embodying the invention for the harvesting of cereals range from less than 10 m/s to approximately 25 m/s, and for harvesting lucerne (alfalfa) leaf, speeds should be in the range of 15 to 30 m/s. Although the stripping rotor 11 in Figure 1a is shown as having eight rows of elements fewer or more may be used. The combs or ribs, or other forms of rows of elements, need not be arranged in straight rows perpendicular to the direction of travel but they may be curved or helically mounted, to even out the drive torque and achieve delivery of the stripped material to one side or into the centre of any collecting device. By way of example of particular dimensions which may be used, the rotor shown in Figure 11a may have a diameter of 550 mm overall; the diameter of an inner core may be 300 mm, and the depth of each element from the tip to the base of a recess between adjacent elements may be 80 mm. In typical use in standing cereal crops, the bottom of the rotor may be set to 250 to 300 mm above the ground. Conveniently the bottom of the rotor may be set to a height equivalent to about one quarter of the height of the crop.

Where the overall diameter of the rotor is in the range 400 mm to 700 mm, the rate of rotation of the rotor may be preferably in the range 250 to 950 rev/min.

Rotor outer diameters may vary from approximately 200 mm to 1000 mm diameter, a preferred range being 400mm to 600 mm diameter. Tip speeds of the crop engaging elements may vary within the approximate range 5 to 40 m/s.

Considering further the general arrangement of the apparatus, and dimensions which can be used, it has been found that there is an important relationship between so called header losses (that is to say losses of free grains and heads or part heads) and the vertical front clearance of the rotor hood relative to a datum level of the bottom-dead-centre of the stripping rotor. Adjustment of the vertical clearance at the front of the hood was found to be particularly effective in reducing header losses. Losses decreased steeply with increasing clearance up to around 250 mm and reached a minimum at around 350 mm.

Thus in many preferred forms of the invention, the vertical front clearance of the rotor hood relative to the bottom-dead-centre level of the rotor, lies in the range 300 to 370 mm, preferably in the range 330 to 350mm. In most normal conditions horizontal hood-to-rotor clearance is of secondary importance, but preferably should be at least 90 mm in most crop conditions.

By the vertical front clearance of the rotor hood relative to the bottom-dead-centre level of the rotor is meant the height of the lowest portion of the hood projecting in front of the stripping rotor, above a horizontal plane passing through the bottom-dead-centre of the stripping rotor. By the horizontal hood-to-rotor clearance is meant the distance between the lowest point of the hood projecting towards the rotor, and a vertical plane, passing through the front-dead-centre of the periphery of the stripping rotor.

## Claims

1. Apparatus for harvesting required crop parts from standing crop comprising
a mobile frame (12) for movement over the ground,
moveable support means (5) mounted for driven movement relative to the frame,
a plurality of outwardly projecting crop engaging elements (15) mounted on the moveable support means (5),
guide means (4) cooperating with the crop engaging elements to form a crop flow passage (33), and
drive means (10) for driving the moveable support means (5) to carry the elements (15) upwardly at a front region of the apparatus so as to detach from standing crop predetermined required parts of the crop and to move the detached crop parts along the crop flow passage (33), the crop engaging elements (15) being arranged to engage standing crop while projecting forwardly relative to the direction of forward travel of the apparatus, the forwardly projecting crop engaging elements (15) forming in operation a plurality of crop gathering regions (44),
characterised in that each crop gathering region (44) has a slot (21) extending inwardly away from the distal ends of the elements (15), the slot (21) following a wave-shaped path leading from side to side relative to the general direction of forward movement of the apparatus so as to induce a lateral shaking motion in the stems of crop which pass into the slot.

2. Apparatus according to claim 1 in which the inwardly extending slot (21) provides re-entrant edges adapted to detach crop parts from the standing crop.

3. Apparatus according to any preceding claim in which the crop engaging elements (15) have distal tips for entering into and dividing crop, and have side edges (16,17) diverging from each other in a direction away from the distal tips of the elements (15).

4. Apparatus according to any preceding claim in which each crop engaging element (15) has a transverse surface for impelling detached crop parts along the crop flow passage (33).

5. Apparatus according to claim 4 in which the drive means (10) is arranged to drive the crop engaging elements (15) at a speed such as to propel the detached crop parts in a fast moving stream along the crop flow passage (33).

6. Apparatus according to any preceding claim in which the crop stripping elements (15) are resiliently mounted, and/or made of flexible resilient material.

7. Apparatus according to any preceding claim in which the said crop stripping elements (15) are arranged with elements (15) which follow each other along the support means (5) being in register with one another.

8. Apparatus according to any preceding claim in which the moveable support means (5) comprises a rotor (11).

9. Apparatus according to any preceding claim in which the said moveable support means (5) comprises an endless conveyor (2).

10. Apparatus according to any preceding claim in which the guide means (4) comprises a cover (18) extending around part of the region at which the crop engaging elements (15) move at the front region of the apparatus.

## Patentansprüche

1. Vorrichtung zum Ernten gewünschter Getreideteile von stehendem Getreide, umfassend:
einen mobilen Rahmen (12) zur Bewegung über dem Boden,
bewegliche Stützeinrichtungen (5), die zur angetriebene Bewegung relativ zu dem Rahmen befestigt sind,
eine Vielzahl von nach außen vorspringenden getreideeingreifenden Elementen (15), welche an den beweglichen Stützeinrichtungen (5) befestigt sind,
Führungseinrichtungen (4), welche mit den getreideeingreifenden Elementen zum Bilden eines Getreideflußdurchganges (33) zusammenwirken, und
Antriebseinrichtungen (10) zum Antreiben der beweglichen Stützeinrichtungen (5) zum Tragen der Elemente (15) nach oben, und zwar bei einem Frontbereich der Vorrichtung, um somit vorbestimmte gewünschte Teile des Getreides von stehendem Getreide abzulösen, und zum Bewegen der abgelösten Getreideteile entlang des Getreideflußdurchgangs (33), wobei die getreideeingreifenden Elemente (15) angeordnet sind zum Eingreifen in das stehende Getreide, während sie nach vorne vorspringen, und zwar relativ zu der Vorwärtsfortbewegungsrichtung der Vorrichtung, wobei die nach vorne vorspringenden getreideeingreifenden Elemente (15) im Betrieb eine Vielzahl von getreidesammelnden Bereichen (44) bilden,
**dadurch gekennzeichnet**,
daß jeder getreidesammelnde Bereich (44) einen Schlitz (21) aufweist, welcher sich nach innen, weg von den distalen Enden der Elemente (15) erstreckt, wobei der Schlitz (21) einem wellenförmigen Pfad folgt, welcher von Seite zu Seite führt, und zwar relativ zu der generellen Richtung der Forwärtsbewegung der Vorrichtung, um somit eine laterale Schüttelbewegung in den Stielen des Getreides zu induzieren, welche in den Schlitz treten.

2. Vorrichtung gemäß Anspruch 1, in welcher der sich nach innen erstreckende Schlitz (21) wiedereintretende Kanten bereitstellt, welche angepaßt sind Getreideteile von stehendem Getreide abzulösen.

3. Vorrichtung gemäß einem vorangehenden Anspruch, in welcher die getreideeingreifenden Elemente (15) distale Spitzen aufweisen zum Eintreten in und zum Aufteilen von Getreide, und Seitenkanten (16, 17) aufweisen, welche voneinander divergieren in einer Richtung weg von den distalen Spitzen der Elemente (15).

4. Vorrichtung gemäß einem vorangehenden Anspruch, in welcher jedes getreideeingreifende Element (15) eine querliegende Oberfläche aufweist zum Antreiben abgelöster Getreideteile entlang des Getreideflußdurchganges (33).

5. Vorrichtung gemäß Anspruch 4, in welcher die Antriebseinrichtung (10) angeordnet ist zum Antreiben der getreideeingreifenden Elemente (15), bei einer Geschwindigkeit, welche derart ist um die abgelösten Getreideteile in einem sich schnell bewegenden Strom entlang des Getreideflußdurchganges (33), vorwärts zu treiben.

6. Vorrichtung gemäß einem vorangehenden Anspruch, in welcher die getreideabstreifenden Elemente (15) elastisch befestigt sind und/oder hergestellt sind aus einem flexiblen elastischen Material.

7. Vorrichtung gemäß einem vorangehenden Anspruch, in welcher die getreideabstreifenden Elemente (15) mit Elementen (15) angeordnet sind, welche einander entlang der Stützeinrichtungen (5) folgen, wobei sie miteinander fluchten.

8. Vorrichtung gemäß einem vorangehenden Anspruch, in welcher die beweglichen Stützeinrichtungen (5) einen Rotor (11) umfassen.

9. Vorrichtung gemäß einem vorangehenden Anspruch, in welcher die beweglichen Stützeinrichtungen (5) einen Endlosförderer (2) umfassen.

10. Vorrichtung gemäß einem vorangehenden Anspruch, in welcher die Führungseinrichtungen (4) einen Deckel (18) umfassen, welcher sich herum um einen Teil des Bereiches erstreckt, bei welchem sich die getreideeingreifenden Elemente (15) an dem Frontbereich der Vorrichtung bewegen.

## Revendications

1. Machine pour la récolte de parties voulues de cultures sur pied, comprenant
un châssis mobile (12), déplaçable sur le sol,
des moyens de support mobiles (5), montés de façon a être entraînés en mouvement par rapport au châssis,
une multiplicité d'éléments saisisseurs de cultures (15) en saillie vers l'extérieur, montés sur les moyens de support mobiles (5),
des moyens de guidage (4) qui forment, en coopération avec les éléments saisisseurs de cultures, un couloir (33) de passage des cultures, et
des moyens d'entraînement (10) pour entraîner les moyens de support mobiles (5) de façon à faire remonter les éléments (15) dans une région antérieure de la machine, pour détacher des cultures sur pied des parties voulues et predeterminées de celles-ci et pour entraîner ces parties detachées des cultures le long du couloir (33) de passage des cultures, les éléments (15) saisisseurs de cultures etant agencés de manière à saisir les cultures sur pied au moment où ils font saillie vers l'avant par rapport à la direction d'avance de la machine, les éléments (15) saisisseurs de cultures formant en service, lorsqu'ils font saillie vers l'avant, une multplicité de régions (44) de rassemblement des cultures, caractérisée en ce que chaque région (44) de rassemblement de cultures comprend une fente (21) qui s'étend vers l'intérieur en s'éloignant des extrémités distales des éléments (15), la fente (21) suivant un chemin ondulé d'un bord à l'autre de celle-ci, par rapport à la direction générale d'avance de la machine, de manière à provoquer un mouvement latéral de tremblement des tiges de cultures qui passent dans la fente.

2. Machine selon la revendication 1, dans laquelle la fente (21) qui s'étend vers l'intérieur, présente des bords rentrants propres à détacher les parties voulues des cultures sur pied.

3. Machine selon l'une quelconque des revendications 1 à 2, dans laquelle les éléments (15) saisisseurs de cultures présentent des pointes distales pour pénétrer dans les cultures et les diviser, ainsi que des arêtes latérales (16, 17) qui divergent l'une par rapport à l'autre dans la direction de l'éloignement à partir des pointes distale des éléments (15).

4. Machine selon l'une quelconque des revendications 1 à 3, dans laquelle chaque élément (15) saisisseur de cultures présente une surface transversale pour chasser les parties détachées des cultures le long du couloir (33) de passage des cultures.

5. Machine selon la revendication 4, dans laquelle les moyens d'entraînement (10) sont agencés de façon à entraîner les éléments (15) saisisseurs de cultures à une vitesse telle que les parties detachées des cultures soient propulsees en un courant rapide le long du couloir (33) de passage des cultures.

6. Machine selon l' une quelconque des revendications 1 à 5, dans laquelle les éléments (15) de dépouille des cultures sont montés elastiquement et/ou sont faits d'une matière souple et elastique.

7. Machine selon l'une quelconque des revendications 1 à 6, dans laquelle lesdits éléments (15) de dépouille des cultures sont disposes de sorte que des éléments (15) qui se suivent le long des moyens de support (5) soient en correspondance mutuelle exacte.

8. Machine selon l'une quelconque des revendications 1 à 7, dans laquelle les moyens de support mobiles (5) comprennent un rotor (11).

9. Machine selon l'une quelconque des revendications 1 à 8, dans laquelle lesdits moyens de support mobiles (5) comprennent. un transporteur sans fin (2).

10. Machine selon l'une quelconque des revendications 1 à 9, dans laquelle les moyens de guidage (4) comprennent un couvercle (18) qui s'étend autour d'une partie de la région dans laquelle les éléments (15) saisisseurs de cultures se déplacent dans la région antérieure de la machine.
